# FASCICULE DE BREVET EUROPEEN

(11) **EP 3 266 633 B1**
(45) Date de publication et mention de la délivrance du brevet: **12.02.2020**
(21) Numéro de dépôt: 17179641.0
(22) Date de dépôt: 04.07.2017
(51) Int. Cl.: B60J 5/04

(54) **RENFORT STRUCTUREL POUR UN CADRE DE PORTIERE D'UN VEHICULE AUTOMOBILE**
STRUKTURELLE VERSTÄRKUNG FÜR EINEN TÜRRAHMEN EINES KRAFTFAHRZEUGS
STRUCTURAL REINFORCEMENT FOR A DOOR FRAME OF A MOTOR VEHICLE

(30) Priorité: 08.07.2016 FR 1656568
(43) Date de publication de la demande: 10.01.2018
(73) Titulaire: RENAULT s.a.s., 92100 Boulogne-Billancourt (FR)
(72) Inventeur: DA SILVA, Romeo, 93220 GAGNY (FR); DEGAUGUE, Remi, 27160 BRETEUIL SUR ITON (FR)

(56) Documents cités:
- EP-A1- 2 397 352
- WO-A1-2010/125264
- WO-A1-2014/054695
- DE-A1- 19 605 450
- DE-A1-102005 014 570
- FR-A1- 2 846 924
- FR-A1- 2 995 865

## Description

La présente invention se rapporte à un renfort structurel pour un cadre de portière d'un véhicule automobile.

Dans le domaine de l'automobile, l'évolution des normes de sécurité impose aux constructeurs d'améliorer la résistance structurelle des véhicules aux chocs extérieurs.

En particulier, les efforts importants susceptibles d'être provoqués par les chocs latéraux sur les portières d'un véhicule automobile imposent de renforcer ces portières pour protéger les passagers installés à l'intérieur de l'habitacle.

A cet effet, il est notamment connu d'installer un renfort latéral s'étendant dans la direction longitudinale de la portière.

Généralement, un tel renfort est installé sensiblement sous l'ouverture de la vitre de portière.

On connait notamment du document FR 2 916 688, un renfort fait d'un profilé de tôle obtenu par extrusion, qui est soudé à la structure de tôle de la portière du véhicule automobile.

Il existe une solution pour améliorer l'intégration d'un renfort structurel sur une portière, en particulier pour les portières sur lesquelles l'installation d'un renfort profilé connu de l'art antérieur n'est pas permise.

Il est connu de EP2397352-A1 ou de WO2014/054695-A1 un renfort structurel pour un cadre de portière d'un véhicule automobile comprenant une première pièce longitudinale et une deuxième pièce longitudinale rapportées l'une sur l'autre, formant une poutre à section creuse à inertie variable.

Ainsi, le renfort peut être obtenu en deux parties séparées, ce qui permet de lui donner une forme et un volume variable, pouvant s'adapter plus simplement à tout type de portière de véhicule automobile.

Cependant, les contraintes d'intégration découlant des exigences esthétiques et fonctionnelles des véhicules automobiles ne permettent pas toujours d'installer un tel renfort profilé sur la structure de cadre de la portière.

Selon l'invention, le renfort structurel est remarquable en ce qu'au moins une desdites première et deuxième pièces longitudinales présente des pattes de fixation déposées le long des première et deuxième pièces longitudinales en s'étendant sensiblement perpendiculaire à la direction longitudinale x sensiblement dans un plan x-z.

Ainsi, on peut optimiser le montage du renfort en prévoyant des pattes de fixation définissant les points de fixation au cadre de portière ou les points de fixation d'une pièce sur l'autre.

En particulier, un tel renfort peut tenir compte de l'environnement de la portière et de ses contraintes esthétiques et fonctionnelles.

Notamment, la première pièce longitudinale est destinée à être fixée sur ledit cadre de portière tandis que la deuxième pièce longitudinale est destinée à être fixée sur ladite première pièce longitudinale. Ce qui permet d'obtenir un renfort présentant une structure relativement simple à fixer sur la portière.

Avantageusement et de manière non limitative, l'une des deux pièces longitudinales présente une portion courbe variable selon la direction longitudinale du renfort de manière à ce que la section creuse de la poutre soit variable selon la direction longitudinale du renfort.

Avantageusement et de manière non limitative, la première pièce longitudinale présente au moins deux orifices pilotes venant s'insérer chacun dans une tige de guidage formant saillie du cadre. Ainsi, les deux orifices pilotes simplifient le positionnement de la première pièce par rapport au cadre de la portière.

Avantageusement et de manière non limitative, la deuxième pièce longitudinale présente au moins deux orifices pilotes venant s'insérer chacun dans une tige de guidage formant saillie de la première pièce longitudinale et/ou du cadre. Ainsi, les deux orifices pilotes de la deuxième pièce longitudinale simplifient le positionnement de la deuxième pièce longitudinale par rapport à la première pièce longitudinale.

Avantageusement et de manière non limitative, lesdites première et deuxième pièces longitudinales sont assemblées fixement l'une à l'autre par soudage par résistance. Ainsi, le renfort peut être solidarisé au cadre de portière de manière relativement robuste.

Avantageusement et de manière non limitative, au moins une desdites première et deuxième pièces longitudinales est obtenue par emboutissage. Ainsi, on peut obtenir un renfort relativement peu coûteux à fabriquer.

L'invention concerne aussi une portière d'un véhicule automobile comprenant un renfort tel que décrit précédemment.

L'invention concerne aussi un véhicule automobile comprenant une portière telle que décrite précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- La figure 1 est une vue en perspective d'un cadre de portière et d'un renfort en vue éclatée selon un premier mode de réalisation de l'invention ;
- La figure 2 est une vue éclatée d'un renfort selon un mode de réalisation de la figure 1 ;
- La figure 3 est une vue de côté d'un renfort selon le mode de réalisation de la figure 1 ;
- Les figures 3a à 3f sont des vues en section droite du renfort selon la figure 3, les coupes étant réalisées en différents endroits de sa longueur ;
- La figure 4 est une vue de côté d'un renfort selon le mode de réalisation de la figure 1 ; et
- La figure 5 est une vue en perspective d'une portière comprenant un renfort selon le mode de réalisation de la figure 1.

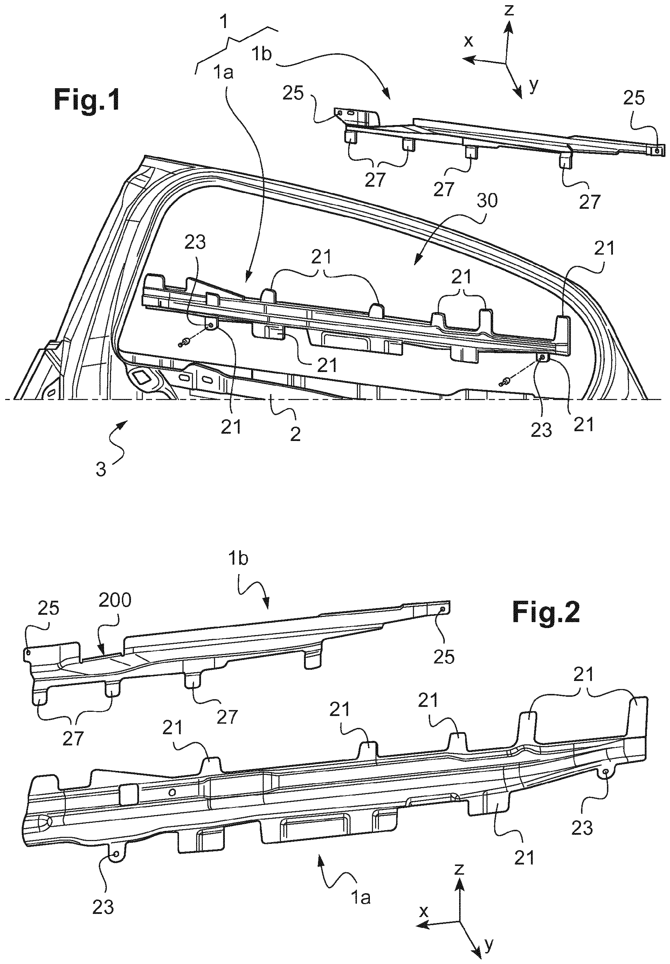

Les figures 1 à 5 se rapportant à un même mode de réalisation, elles seront commentées simultanément.

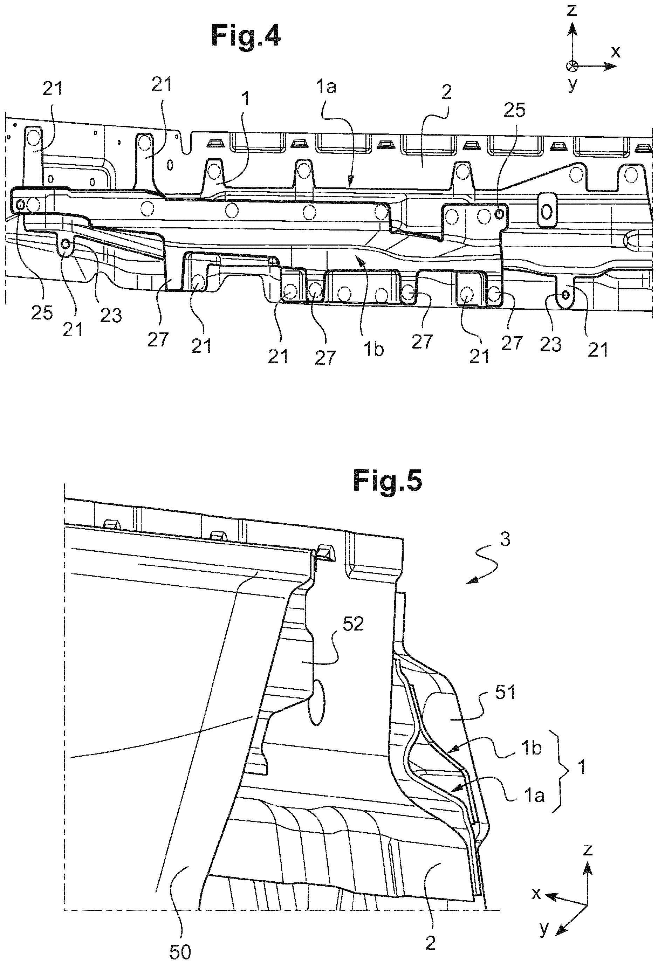

En référence à la figure 5, une portière de véhicule automobile 3 comprend un cadre de portière 2 en tôle emboutie sur lequel est installé un renfort structurel 1. Le renfort structurel 1, aussi appelé renfort 1, est soudé sur le cadre de portière 2.

Le renfort 1 est parfois appelé renfort latéral 1 car il est installé sur une partie latérale du véhicule automobile, en l'occurrence une portière 3.

Un caisson de portière 51 en tôle est installé en couverture du renfort structurel 1 par rapport au cadre de portière 2.

Un panneau extérieur de carrosserie 50 est installé sur le cadre de portière de manière opposée au renfort structurel 1 et au caisson de portière 51 par rapport au cadre de portière 2. Autrement dit, le panneau extérieur de carrosserie 50 est fixé sur le cadre de portière de l'autre côté du cadre de portière 2 par rapport au renfort latéral 1 et par rapport au caisson de portière 51.

Entre le panneau extérieur de carrosserie 50 et le cadre de portière 2, est aussi installé un renfort de ceinture 52 apportant une rigidité structurelle à la portière 3 sur sa face extérieure par rapport à l'habitacle du véhicule automobile.

Le renfort 1 de portière est installé de manière à être orienté vers l'intérieur de l'habitacle lorsque le cadre de portière 2 est monté sur la caisse du véhicule automobile.

Le renfort structurel 1 de portière latérale 3 comprend deux pièces longitudinales 1a et 1b rapportées l'une sur l'autre et formant une poutre creuse à inertie variable.

La première pièce longitudinale 1a, aussi appelée première pièce 1a, est une pièce en tôle emboutie longitudinale montée à fixation sur le cadre 2 de portière 3.

Comme on le voit figure 1, cette première pièce 1a est installée sensiblement sous l'ouverture 30 de la portière 3 destinée à recevoir la vitre de portière 3, selon la direction longitudinale x de la portière 3.

La direction longitudinale x de la portière correspond sensiblement à la direction longitudinale du véhicule automobile, lorsque la portière 3 est refermée.

Autrement dit, lorsque la portière 3 est refermée, la première pièce 1a du renfort 1 et la deuxième pièce 1b du renfort 1 s'étendent dans une direction longitudinale x par rapport au véhicule automobile.

La première pièce 1a et la deuxième pièce 1b du renfort 1 s'étendent aussi selon une direction verticale z de la portière 3, correspondant à la direction verticale du véhicule automobile, lorsque la portière 3 est montée sur le véhicule.

La première pièce longitudinale 1a présente une pluralité de pattes de fixation 21 disposées le long de la première pièce 1a et s'étendant sensiblement perpendiculairement à la direction longitudinale x de la première pièce 1a. Ces pattes de fixation 21 peuvent ainsi être plaquées et soudées contre le cadre 2.

Ici, la soudure est effectuée par soudage par résistance ce qui permet d'obtenir une fixation particulièrement résistante des pattes de fixation 21 contre le cadre 2 de portière.

Afin de faciliter l'installation de la première pièce 1a contre le cadre 2 de portière 3, la première pièce 1a présente deux orifices de guidage 23, aussi appelés orifices pilotes 23.

Les orifices 23 sont ménagés chacun sur une patte de fixation 21 de la première pièce 1a. En particulier, les orifices de guidage 23 sont éloignés longitudinalement les uns des autres pour permettre un meilleur positionnement de la première pièce 1a contre le cadre 2.

Pour simplifier le positionnement de la première pièce 1a, les orifices 23 sont prévus pour être traversés par des tiges de guidage, non représentées, solidaires du cadre 2, s'étendant en saillie sensiblement perpendiculairement au plan principal du cadre 2.

Les tiges de guidage sont fixées au cadre 2, ou selon une alternative sont obtenues d'une seule pièce avec au moins une partie du cadre 2.

L'insertion des tiges de guidage dans les orifices de guidage 23 correspondants permet ainsi de positionner simplement la première pièce longitudinale 1a pour être soudée contre le cadre 2 de portière 3 via la pluralité de pattes de fixation 21.

Lorsque la première pièce 1a est positionnée et soudée sur le cadre 2, on vient alors rapporter contre cette première pièce 1a une deuxième pièce longitudinale 1b, aussi appelée deuxième pièce 1b.

La deuxième pièce 1b présente une forme longitudinale et une courbure qui varie selon la direction longitudinale x, de sorte que, lorsqu'elle est rapportée contre la première pièce 1a, l'ensemble des deux pièces 1a, 1b forme un renfort 1 creux dont la section creuse est variable dans la direction longitudinale x.

Cette deuxième pièce 1b présente également deux orifices de guidage 25, aussi appelés orifices pilotes 25.

Ces deux orifices 25 sont ménagés dans la deuxième pièce 1b de manière opposée l'un de l'autre par rapport à la direction longitudinale de la deuxième pièce 1b.

Les deux orifices 25 s'insèrent dans des tiges de guidage, qui peuvent être soit les mêmes tiges de guidage que celles permettant le guidage de la première pièce 1a pour sa mise en place avant soudage, soit d'autres tiges de guidage, par exemple montées fixes sur la première pièce 1a.

Les deux orifices 25 permettent ainsi de faciliter l'installation de la deuxième pièce 1b sur la première pièce 1a.

La deuxième pièce 1b présente aussi une pluralité de pattes de fixation 27 s'étendant dans un plan parallèle aux pattes de fixation 21 de la première pièce 1a, les pattes de fixation 27 de la deuxième pièce 1b étant conformées pour venir au contact de la première pièce 1a lorsque la deuxième pièce 1b est rapportée contre la première pièce 1a.

Ainsi, les pattes de fixation 27 sont soudées directement sur la première pièce 1a. Cependant, on réalise un soudage par résistance permettant de fusionner localement les matériaux de la deuxième pièce 1b avec ceux de la première pièce 1a et avec le cadre 2 de portière 3. Autrement dit, le soudage par résistance crée un noyau de soudure regroupant ces trois couches de matériau.

Ici, les trois couches de matériau du cadre de portière 2, de la première pièce 1a et de la deuxième pièce 1b sont en tôle. Cependant tout autre matériau adapté peut être utilisé. En particulier, on peut prévoir d'effectuer des soudures de tout type de métal.

Dans ce mode de réalisation, la première pièce 1a du renfort 1 s'étend sensiblement sur toute la longueur de l'ouverture 30 destinée à recevoir la vitre de la portière 3.

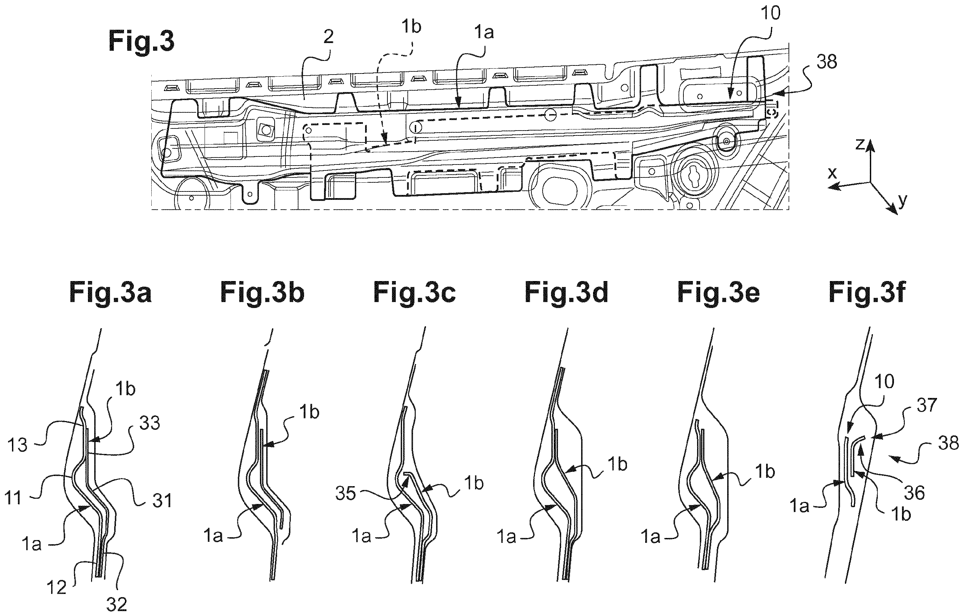

Les figures 3a, 3b, 3c, 3d, 3e et 3f représentent des sections droites du renfort 1 prises en des positions longitudinales distinctes les unes des autres.

En référence à la figure 3a, qui représente une section droite de la première pièce 1a, la première pièce 1a présente une portion courbe 11 s'étendant entre une bordure longitudinale supérieure 13 et une bordure longitudinale inférieure 12.

Lorsque le renfort 1 est fixé sur la portière 3 du véhicule automobile, la bordure longitudinale supérieure 13 de la première pièce 1a est définie comme étant la bordure longitudinale s'étendant au-dessus de la portion courbe 11 tandis que la bordure longitudinale inférieure 12 est définie comme étant la bordure s'étendant de manière opposée à la bordure longitudinale supérieure 13 par rapport à la portion courbe 11.

Comme il ressort des figures 3a à 3f, la portion courbe 11 s'étend sensiblement sur toute la longueur de la première pièce 1a.

La portion courbe 11 est sensiblement constante sur toute la longueur de la première pièce 1a.

La portion courbe 11 de la première pièce 1a est définie de sorte à présenter une courbure sensiblement complémentaire de la courbure du cadre 2 de portière 3 où la première pièce 1a est plaquée afin d'y être soudée.

Les bordures supérieure 13 et inférieure 12 de la première pièce 1a prennent appui longitudinalement sur le cadre 2 de la portière 3 sur sensiblement toute la longueur de la pièce 1a.

A une extrémité longitudinale 10, la première pièce 1a présente une forme effilée sensiblement plane, aussi appelée extrémité effilée 10 de la première pièce 1a.

La deuxième pièce 1b présente quand à elle une portion courbe 31 s'étendant entre une bordure longitudinale inférieure 32 et une bordure longitudinale supérieure 33.

Lorsque le renfort 1 est monté sur le cadre 2 de portière 3, la bordure inférieure longitudinale 32 de la deuxième pièce 1b s'étend en-dessous de la portion courbe 31 tandis que la bordure longitudinale supérieure 33 de la deuxième pièce 1b s'étend à l'opposé de la bordure longitudinale inférieure 32 par rapport à la portion courbe 31.

La portion courbe 31 et les bordures longitudinales supérieure 33 et inférieure 32 ne sont pas constantes dans la longueur de la deuxième pièce 1b.

Autrement dit, la forme que présente une section droite de la deuxième pièce 1b varie le long de la direction longitudinale x du renfort 1.

Les bordures longitudinales 32, 33 de la deuxième pièce 1b peuvent s'effacer, voir par exemple l'ajourage 200 à la figure 2, ou présenter une largeur réduite le long de la deuxième pièce 1b, de manière à faciliter l'intégration du renfort 1 sur la portière 3.

Lorsque qu'une bordure longitudinale 32, 33 est réduite ou effacée, de sorte à définir un ajourage, on compense la faiblesse structurelle induite par l'ajout d'un rebord 35, 36 permettant de rigidifier localement la deuxième pièce 1b.

Le rebord 35, 36 peut par exemple être un rebord dont l'extrémité libre est orientée vers la première pièce, dit rebord convexe 35, ou un rebord dont l'extrémité libre est orientée à l'opposée de la première pièce, dit rebord concave 36.

La portion courbe 31 de la deuxième pièce 1b présente une section variable selon la direction longitudinale x de sorte qu'elle permet de faire varier la section creuse du renfort 1.

En particulier, à une extrémité de la deuxième pièce, en référence aux figures 3a et 3b, la portion courbe 31 est orientée vers la première pièce 1a, de sorte à forme une portion courbe concave, qui a pour effet de réduire localement le volume de la section creuse du renfort 1.

En un point sensiblement médian dans la direction longitudinale x de la deuxième pièce 1b, en référence aux figures 3d et 3e, la portion courbe 31 est orientée vers l'opposé de la première pièce 1a de sorte qu'elle forme une portion courbe convexe, ce qui a pour effet d'augmenter localement le volume de la section creuse du renfort 1, augmentant ainsi la résistance du renfort 1 au voisinage de ce point sensiblement médian.

En référence à la figure 3f, la deuxième pièce 1b présente aussi une extrémité effilée 37 sensiblement plane. L'extrémité effilée 37 de la deuxième pièce 1b vient alors au contact de l'extrémité effilée 10 de la première pièce 1a lorsqu'elles sont rapportées l'une sur l'autre. Ainsi à l'extrémité 38 correspondante du renfort 1, la section creuse est absente.

Pour augmenter la robustesse de cette extrémité 38, la deuxième pièce 1b présente un rebord concave 36.

En particulier, on pourra déterminer par la mise en œuvre de simulation numérique, par exemple des simulations par éléments finis, les variations de largeur et de courbure des première 1a et deuxième 1b pièces longitudinales, afin d'assurer une robustesse et une intégration optimale du renfort 1 sur le cadre 2 de portière 3.

Ainsi, on obtient un renfort structurel 1 formant une poutre à inertie variable par l'adjonction de la première pièce 1a sur laquelle est rapportée la deuxième pièce 1b, les deux pièces étant solidarisées l'une à l'autre par soudage.

Cette poutre à inertie variable et, en particulier, la variation de sa section creuse le long de la direction longitudinale x, est adaptée pour assurer la rigidité de la portière en des points critiques déterminés notamment lors de simulations numériques ou de tests de chocs latéraux. Ceci permet en outre d'obtenir un renfort 1 relativement simple à installer sur la portière 3 et présentant un coût de fabrication peu élevé.

Dans une première étape d'installation du renfort, on soude la première pièce 1a du renfort 1 au cadre 2 de portière 3.

A cet effet, on effectue un soudage par résistance des pattes de fixation 21 de la première pièce 1a sur le cadre 2 de portière 3.

La position des pattes de fixation 21 sur la première pièce 1a est déterminée lors d'une étape préalable de simulation numérique, ou de maquettage, au cours de laquelle on détermine la position des points de soudage de la première pièce 1a sur la portière 3 en fonction des impératifs de résistance et d'intégration du renfort 1.

Les pattes de fixation 21 sont alors soudées au cadre de portière 2.

Afin d'obtenir un bon positionnement de la première partie 1a sur le cadre de portière 2 on aligne les orifices de guidage 23 de la première pièce 1a du renfort avec les tiges de positionnement du cadre 2.

Une fois la première pièce 1a soudée au cadre 2 on rapporte la deuxième pièce 1b du renfort 1 sur la première pièce 1a du renfort 1.

Cette deuxième pièce 1b est rapportée sur la première pièce 1a en alignant par exemple les orifices de guidage 25 avec des tiges de guidage préinstallées sur la première pièce 1a du renfort de sorte que lorsque les orifices de guidage 25 sont traversés par les tiges de guidage non représentées, la deuxième pièce 1b rapportée sur la première pièce 1a est en position pour être soudée.

Ensuite, on procède au soudage de la deuxième pièce 1b sur la première pièce 1a et sur le cadre 2. A cet effet, on pratique un soudage par résistance à trois couches provoquant la fusion des trois épaisseurs de tôle ici le cadre 2, la première partie 1a et la deuxième partie 1b.

Autrement dit, lors des deux étapes précédentes la première pièce 1a est soudée directement au cadre 2 et la deuxième pièce 1b est soudée à la première pièce 1a et au cadre 2.

De cette manière, on obtient un renfort 1 positionné de manière relativement simple et rapide tout en étant robustement fixé au cadre 2 de portière 3.

Puis, on procède à la fixation du caisson de portière 51 en tôle par dessus le renfort 1 sur le cadre de portière 2. Puis, de l'autre côté du cadre 2 par rapport au renfort 1, on installe le renfort de ceinture 52 apportant une rigidité structurelle supplémentaire à la portière 3.

Enfin, on installe le panneau extérieur de carrosserie 50 de sorte qu'il recouvre le renfort de ceinture 52 sur le cadre de portière 2.

Ainsi, on obtient un procédé d'installation relativement rapide et simple d'un renfort 1 peu coûteux à produire qui permet d'optimiser l'intégration des renforts latéraux 1 pour des portières 3 dans des véhicules dont les contraintes esthétiques et fonctionnelles ne permettent pas l'installation de renforts profilés connus de l'art antérieur.

Ceci permet notamment d'obtenir des portières peu épaisses mais répondant aux exigences de sécurité concernant les chocs latéraux sur les portières de véhicule automobile.

## Revendications

1. Renfort structurel (1) pour un cadre (2) de portière (3) d'un véhicule automobile, ledit renfort (1) comprend une première pièce longitudinale (1a) et une deuxième pièce longitudinale (1b) rapportées l'une sur l'autre, formant une poutre à section creuse à inertie variable, au moins l'une des deux pièces longitudinales (1a, 1b) présente une portion courbe variable selon la direction longitudinale du renfort (1) de manière à ce que la section creuse de la poutre soit variable selon la direction longitudinale du renfort, **caractérisé en ce que** la première pièce longitudinale (1a) présente au moins deux orifices pilotes (23) venant s'insérer chacun dans une tige de guidage formant saillie du cadre (2), et **en ce qu'**au moins une desdites première et deuxième pièces longitudinales (1a, 1b) présente des pattes de fixation (21, 27) disposées le long des première et deuxième pièces longitudinales (1a, 1 b) en s'étendant sensiblement perpendiculaire à la direction longitudinale (x) sensiblement dans un plan (x-z).

2. Renfort (1) selon la revendication 1, **caractérisé en ce que** la deuxième pièce longitudinale (1b) présente au moins deux orifices pilotes (25) venant s'insérer chacun dans une tige de guidage formant saillie de la première pièce longitudinale (1a) et/ou du cadre (2).

3. Renfort (1) selon la revendication 1 ou 2, **caractérisé en ce que** lesdites première et deuxième pièces longitudinales (1a, 1b) sont assemblées fixement l'une à l'autre par soudage par résistance.

4. Renfort (1) selon l'une quelconque des revendications 1 à 3, **caractérisé en ce qu'**au moins une desdites première et deuxième pièces longitudinales (1a, 1b) est obtenue par emboutissage.

5. Portière (3) d'un véhicule automobile comprenant un renfort (1) selon l'une quelconque des revendications 1 à 4.

6. Véhicule automobile comprenant une portière (3) selon la revendication 5.

## Patentansprüche

1. Strukturelle Verstärkung (1) für einen Rahmen (2) einer Tür (3) eines Kraftfahrzeugs, wobei die Verstärkung (1) ein erstes Längsteil (1a) und ein zweites Längsteil (1b) umfasst, die aneinander angefügt sind, wobei sie einen Träger mit hohlem Querschnitt mit variabler Trägheit bilden, wobei wenigstens eines der zwei Längsteile (1a, 1b) einen variablen gekrümmten Abschnitt in der Längsrichtung der Verstärkung (1) aufweist, so dass der hohle Querschnitt des Trägers in der Längsrichtung der Verstärkung variabel ist, **dadurch gekennzeichnet, dass** das erste Längsteil (1a) wenigstens zwei Steueröffnungen (23) aufweist, in welche jeweils eine Führungsstange eingesteckt wird, die vom Rahmen (2) vorsteht, und dadurch, dass das erste und/oder das zweite Längsteil (1a, 1b) Befestigungslaschen (21, 27) aufweisen, die entlang des ersten und zweiten Längsteils (1a, 1b) angeordnet sind, wobei sie sich im Wesentlichen senkrecht zur Längsrichtung (x) im Wesentlichen in einer Ebene (x-z) erstrecken.

2. Verstärkung (1) nach Anspruch 1, **dadurch gekennzeichnet, dass** das zweite Längsteil (1b) wenigstens zwei Steueröffnungen (25) aufweist, in welche jeweils eine Führungsstange eingesteckt wird, die vom ersten Längsteil (1a) und/oder vom Rahmen (2) vorsteht.

3. Verstärkung (1) nach Anspruch 1 oder 2, **dadurch gekennzeichnet, dass** das erste und das zweite Längsteil (1a, 1b) durch Widerstandsschweißen fest miteinander verbunden sind.

4. Verstärkung (1) nach einem der Ansprüche 1 bis 3, **dadurch gekennzeichnet, dass** das erste und/oder das zweite Längsteil (1a, 1b) durch Tiefziehen erhalten werden.

5. Tür (3) eines Kraftfahrzeugs, welche eine Verstärkung (1) nach einem der Ansprüche 1 bis 4 umfasst.

6. Kraftfahrzeug, welches eine Tür (3) nach Anspruch 5 umfasst.

## Claims

1. Structural reinforcement (1) for a frame (2) of a door (3) of a motor vehicle, said reinforcement (1) comprises a first longitudinal component (1a) and a second longitudinal component (1b) attached to one another, forming a variable-inertia hollow-section beam, at least one of the two longitudinal components (1a, 1b) has a variable curved portion in the longitudinal direction of the reinforcement (1) such that the hollow section of the beam is variable in the longitudinal direction of the reinforcement, **characterized in that** the first longitudinal component (1a) has at least two pilot holes (23) each being inserted in a guide rod forming a projection from the frame (2), and **in that** at least one of said first and second longitudinal components (1a, 1b) has fixing tabs (21, 27) arranged along the first and second longitudinal components (1a, 1b) extending substantially perpendicular to the longitudinal direction (x) substantially in a plane (x-z).

2. Reinforcement (1) according to Claim 1, **characterized in that** the second longitudinal component (1b) has at least two pilot holes (25) each being inserted in a guide rod forming a projection from the first longitudinal component (1a) and/or from the frame (2).

3. Reinforcement (1) according to Claim 1 or 2, **characterized in that** said first and second longitudinal components (1a, 1b) are assembled securely to one another by electric resistance welding.

4. Reinforcement (1) according to any one of Claims 1 to 3, **characterized in that** at least one of said first and second longitudinal components (1a, 1b) is obtained by drawing.

5. Door (3) of a motor vehicle comprising a reinforcement (1) according to any one of Claims 1 to 4.

6. Motor vehicle comprising a door (3) according to Claim 5.
